# EUROPÄISCHE PATENTSCHRIFT

(11) **EP 4 519 036 B1**
(45) Veröffentlichungstag und Bekanntmachung des Hinweises auf die Patenterteilung: **31.12.2025**
(21) Anmeldenummer: 23727225.7
(22) Anmeldetag: 12.05.2023
(51) Int. Cl.: B22C 1/22, B22C 9/02, B22C 9/10, B29C 64/165, B33Y 10/00, B33Y 70/10, B28B 1/00, C04B 35/634, C04B 35/047, C04B 35/101, C04B 35/106, C04B 35/14, C04B 35/195, C04B 35/565, C04B 35/622, C04B 35/632, C04B 35/66

(54) **VERFAHREN ZUM SCHICHTWEISEN AUFBAU VON BAUKÖRPERN MIT EINEM BINDEMITTEL MODIFIZIERTER VISKOSITÄT**
PROCESS FOR LAYER-BY-LAYER BUILDING OF BUILT ARTICLES WITH A VISCOSITY-MODIFIED BINDER
PROCÉDÉ DE CONSTRUCTION COUCHE PAR COUCHE D'ARTICLES CONSTRUITS AVEC UN LIANT À VISCOSITÉ MODIFIÉE

(30) Priorität: 13.05.2022 DE 102022112109
(43) Veröffentlichungstag der Anmeldung: 12.03.2025
(73) Patentinhaber: ASK Chemicals GmbH, 40721 Hilden (DE)
(72) Erfinder: DETERS, Heinz, 40470 Düsseldorf (DE); POLSAKIEWICZ, Dominik, 53173 Bonn (DE); ZUPAN, Henning, 42781 Haan (DE); KREY, Thomas, 40477 Düsseldorf (DE); BARTELS, Dennis, 46284 Dorsten (DE); KAMINSKI, Arkadius, 40822 Mettmann (DE); RIENSCH, Nicolas, 40593 Düsseldorf (DE)
(74) Vertreter: Müller Schupfner & Partner Patent- und Rechtsanwaltspartnerschaft mbB (Hamburg)
(86) Internationale Anmeldenummer: PCT/DE2023/100352
(87) Internationale Veröffentlichungsnummer: WO 2023/217325

(56) Entgegenhaltungen:
- WO-A1-2018/224093
- JP-A- 2020 082 127
- US-A1- 2003 055 125
- US-A1- 2019 177 239

## Beschreibung

Die vorliegende Erfindung betrifft ein Verfahren zum schichtweisen Aufbau eines dreidimensionalen Baukörpers. Die so hergestellten Baukörper sind u.a. als Kerne oder Formen und für den Metallguss geeignet. Die so hergestellten Baukörper können auch weiteren Verwendungen außerhalb des Metallgusses zugeführt werden. Weiterhin von der Erfindung umfasst ist ein Bindemittel und ein Kit umfassend das Bindemittel und separat hiervon den Härter.

### Stand der Technik

Unter der Bezeichnung Formkörper werden Kerne und Formen, einzeln oder gemeinsam, für den Metallguss verstanden. Die Formkörper setzen sich im Wesentlichen aus Kernen und Formen zusammen, welche die Negativformen des herzustellenden Gussstücks darstellen. Diese Kerne und Formen bestehen dabei aus einem feuerfesten Material, beispielsweise Quarzsand, und einem geeigneten Bindemittel, das dem Formkörper eine ausreichende mechanische Festigkeit verleiht. Der feuerfeste Formgrundstoff liegt in einer rieselfähigen Form vor. Durch das Bindemittel wird ein fester Zusammenhalt zwischen den Partikeln/Körnern des Formgrundstoffs erzeugt, so dass der Formkörper die erforderliche mechanische Stabilität erhält.

Formkörper müssen verschiedene Anforderungen erfüllen. Beim Gießvorgang selbst müssen sie zunächst eine ausreichende Festigkeit und Temperaturbeständigkeit aufweisen, um das flüssige Metall in den aus einer oder mehreren Gieß(teil)formen gebildeten Hohlraum aufnehmen zu können. Nach Beginn des Erstarrungsvorgangs wird die mechanische Stabilität des Gussstücks durch eine erstarrte Metallschicht gewährleistet, die sich entlang der Wände des Formkörpers ausbildet. Das Material des Formkörpers muss sich nun unter dem Einfluss der vom Metall abgegebenen Hitze in der Weise zersetzen, dass es seine mechanische Festigkeit verliert, also der Zusammenhalt zwischen einzelnen Partikeln/Körnern des feuerfesten Materials aufgehoben wird. Im Idealfall zerfällt der Formkörper wieder zu einem feinen Sand, der sich mühelos vom Gussstück entfernen lässt.

Neben dem Metallguss können Erzeugnisse aus Verfahren mit schichtweisem Aufbau auch für andere Einsatzzwecke genutzt werden. Beispielhaft, aber nicht exklusiv, können hier künstlerische Artikel, beispielsweise Figuren, und metallische oder keramische Erzeugnisse genannt werden, die meist durch einen Nachbehandlungsschritt in ein fertiges Bauteil überführt werden. Diese Erzeugnisse werden nachfolgend als Baukörper bezeichnet. Der Begriff Baukörper ist weiter gefasst als Formkörper und umfasst diese und damit auch Formen und/oder Kerne für den Metallguss.

Unter der Bezeichnung "3D-Druck" sind verschiedene Methoden zur Herstellung dreidimensionaler Körper durch schichtweisen Aufbau bekannt. Ein Vorteil dieser Verfahren ist die Möglichkeit, auch komplexe, aus einem Stück bestehende Körper mit Hinterschneidungen und Hohlräumen herzustellen. Mit konventionellen Methoden müssten diese Körper aus mehreren, einzeln gefertigten Teilen zusammengefügt werden. Ein weiterer Vorteil besteht darin, dass die Verfahren in der Lage sind, die Körper ohne Formwerkzeuge direkt aus den CAD-Daten herzustellen.

Es ergeben sich durch die 3-dimensionalen Druckverfahren neue Anforderungen an Bindemittel, die die Baukörper / Formkörper zusammenhalten, wenn das Bindemittel oder eine Bindemittel-Komponente durch die Düsen eines Druckkopfes appliziert werden soll. Dann müssen die Bindemittel nicht nur zu einem ausreichenden Festigkeitsniveau und zu guten Zerfallseigenschaften nach dem Metallguss führen sowie eine ausreichende Thermo- und Lagerstabilität aufweisen, sondern nun auch "verdruckbar" sein, d.h. die Düsen des Druckkopfes sollen sich einerseits nicht durch das Bindemittel festsetzen, andererseits sollte das Bindemittel auch nicht direkt aus dem Druckkopf herausfließen können, sondern einzelne Tröpfchen bilden.

Es sind verschiedene Methoden zum schichtweisen Aufbau von Baukörpern bekannt. Mit Hilfe dieser Verfahren lassen sich Körper mit selbst kompliziertesten Geometrien durch 3D-Druck schichtweise und ohne Formwerkzeuge direkt aus den CAD-Daten herstellen. Dies ist mit konventionellen formgebundenen Methoden nicht möglich.

WO 01/68336 A2 offenbart unterschiedliche Bindemittel für den schichtweisen Aufbau. Unter anderem wird auch die Verwendung eines nicht näher beschriebenen Furanharzes mit mindestens 50% Furfurylalkohol und ungefähr 4% Ethylenglykol als Bindemittelkomponente genannt. Die Harzkomponente des Bindemittels wird schichtweise über die gesamte Arbeitsfläche eines losen Formgrundstoffes aufgesprüht und danach ebenfalls schichtweise, aber unter selektivem Aufbringen eines Härters, wie einer organischen Säure, ausgehärtet. Als organische Säure wird Toluolsulfonsäure offenbart. Als nachteilig und aufwendig bei diesem Verfahren erweist sich der hohe Binderverbrauch, da die gesamte Arbeitsfläche mit der Harzkomponente besprüht wird. WO 01/72502 A1 variiert dieses Verfahren, indem sowohl flüssiges Bindemittel, unter anderem ebenfalls ein nicht näher beschriebenes Furanharz, als auch flüssiger Härter wie Toluolsulfonsäure nacheinander in der Reihenfolge Harzkomponente und danach Härter selektiv und schichtweise auf die auszuhärtenden Teilbereiche aufgebracht werden.

Ein weiteres Verfahren zum schichtweisen Aufbau von ausgehärteten dreidimensionalen Formkörpern ist in WO 2018/224093 A1 offenbart. In dieser Druckschrift wird eine Harzkomponente, umfassend ein Furanharz als Umsetzungsprodukt von zumindest Aldehyd-Verbindung und Furfurylalkohol und fakultativ Verbindungen enthaltend Stickstoff und/oder Phenol-Verbindungen, wobei der Stickstoffgehalt der Harzkomponente weniger als 5 Gew.-% beträgt und wobei die Harzkomponente mehr als 5 Gew.-% und weniger als 50 Gew.-% monomeren Furfurylalkohol, bezogen auf die Harzkomponente, enthält, eingesetzt.

In WO 2004/110719 A2 wird die Reihenfolge der Zugabe umgekehrt. Zuerst wird der Formgrundstoff mit einem Härter vorgemischt und danach die Harzkomponente schichtweise selektiv aufgetragen. Als Härter werden Säuren, Amine und Ester genannt. Die Härter werden nicht näher beschrieben. Die Harzkomponente wird mit einer Viskosität von 5 mPas bis 60 mPas bei 20 °C beschrieben.

In DE 102014106178 A1 wird ein Verfahren zum schichtweisen Aufbau von Körpern beschrieben, in dem ein Formgrundstoff mittels eines Resolharzes und eines Esters schichtweise ausgehärtet wird.

Insbesondere das System Säure/Furanharz entsprechend WO 2004/110719 A2 und das System Ester/Resolharz entsprechend DE 102014106178 A1 haben beim schichtweisen Aufbau von Formkörpern in der Praxis eine gewisse Verbreitung gefunden und werden bei der Entwicklung neuer Gussteile sowie bei der Herstellung von Einzelteilen oder kleinen Serien eingesetzt, bei denen die konventionelle Fertigung mit Formwerkzeugen zu aufwendig und teuer bzw. nur mit einem komplizierten Kernpaket darstellbar wäre.

Das System Säure/Furanharz weist den Nachteil auf, dass aufgrund einer zu geringen Viskosität des Bindemittels die Applikation des Bindemittels mittels eines Inkjet-Druckkopfes stark beeinträchtigt werden kann. Dann kann es zu einem unkontrollierten Auslaufen des Bindemittels aus dem Druckkopf oder einer unkontrollierten Tropfenerzeugung über den Druckkopf kommen. Dies gilt insbesondere für Bindemittel mit einem hohen Anteil an monomerem Furfurylalkohol. Darüber hinaus kann die Viskosität des Bindemittels in Abhängigkeit einer veränderten Prozesstemperatur, wie sie beispielsweise in WO 2004/110719 A2 beschrieben wird, stark variieren.

### Aufgabe der Erfindung

Es ist daher die Aufgabe der vorliegenden Erfindung, ein Verfahren zum schichtweisen Aufbau eines dreidimensionalen Formkörpers bzw. Baukörpers bereitzustellen, bei dem das eingesetzte Bindemittel aufgrund angepasster Viskosität eine optimale Applikation ermöglicht, z.B. über einen Inkjet-Druckkopf. Weiterhin soll der Formkörper bzw. Baukörper eine gute Festigkeit aufweisen.

### Zusammenfassung der Erfindung

Die Aufgabe wird mit einem Verfahren mit den Merkmalen der unabhängigen Ansprüche gelöst. Vorteilhafte Weiterentwicklungen des erfindungsgemäßen Verfahrens sind Gegenstand der abhängigen Patentansprüche oder nachfolgend beschrieben.

Die Erfindung betrifft ein Verfahren zum schichtweisen Aufbau von Baukörpern aus einer Baustoffmischung umfassend zumindest einen Baugrundstoff, einen Härter und ein Bindemittel, umfassend zumindest die folgenden Schritte:
a) Bereitstellen zumindest eines Baugrundstoffs, eines Härters und eines Bindemittels;
b) Ausbreiten einer Schicht (dünnen Schicht) zumindest des Baugrundstoffs mit einer Schichtdicke von 0,05 mm bis 3 mm, bevorzugt 0,1 mm bis 2 mm und besonders bevorzugt 0,1 bis 1 mm;
c) Bedrucken ausgewählter Bereiche der Schicht mit dem Bindemittel umfassend zumindest Furfurylalkohol und einen Viskositätsmodifikator; und
d) mehrfaches Wiederholen der Schritte b) und c);

wobei der Härter entweder im Baugrundstoff als Teil der Schicht ausgebreitet wird oder auf die Schicht aufgebracht wird oder beides; und
wobei der Härter eine Säure ist oder enthält;
wobei der Viskositätsmodifikator ein im Bindemittel gelöster Novolak ist und das Bindemittel eine Viskosität von 5 bis 40 mPas bei 25 °C aufweist.

Die Baustoffmischung umfasst zumindest den Baugrundstoff, den Härter und das Bindemittel.

Der Härter kann in den Baugrundstoff eingearbeitet sein oder auf die Schicht aufgebracht werden z.B. auch auf jede zweite oder dritte Schicht. Typischer wird dann auf jede Schicht Härter aufgebracht. Das Aufbringen kann z.B. mit einem Sprüh- oder Druckkopf erfolgen. Der Anteil des Härters beträgt vorzugsweise 0,05 Gew.-% bis kleiner 3 Gew.-% Härter, bezogen auf die Baustoffmischung.

Das Bindemittel enthält Furfurylalkohol und den darin gelösten Viskositätsmodifikator (obligatorische Komponenten) und ggf. weitere fakultative Komponenten.

Der Anteil an Furfurylalkohol an der Gesamtheit des Bindemittels beträgt mehr als 60 Gew.-%, bevorzugt mehr als 75 Gew.-%, besonders bevorzugt mehr als 80 Gew.-%, und ganz besonders bevorzugt mehr als 90 Gew.-%. Nach einer Ausgestaltung werden abgesehen von dem Novolak keine weiteren Harze im Bindemittel eingesetzt.

Das Bindemittel weist eine Viskosität von 5 bis 40 mPas bei 25 °C auf. Der Viskositätsmodifikator ist ein Novolak. Der Novolak weist vorzugsweise ein zahlenmittleres Molekulargewicht von größer 300 g/mol auf.

Das Bindemittel umfasst 0,1 bis 25 Gew.-%, insbesondere 0,1 bis 12 Gew.-%, vorzugsweise 2,0 bis 9,0 Gew.-%, und besonders bevorzugt 3,0 Gew.-% bis 8,0 Gew.-% des Novolaks.

Es wurde gefunden, dass der Viskositätsmodifikator eine gute Löslichkeit in dem Bindemittel aufweist. Insbesondere wird der Novolak in fester Form zugegeben und dann im Bindemittel gelöst. Um das Lösen zu beschleunigen, erfolgt das Lösen vorzugsweise unter Erwärmen auf über 30°C.

Die Baustoffmischung enthält nach einer Ausgestaltung keine Formaldehydspender wie z. B. Hexamethylentetramin, weil die Härtung durch Härtung des Furfurylalkohols mittel Säuren erfolgt und nicht durch die Reaktion von Hexamethylentetramin und dem Novolak.

Neben dem Furfurylalkohol und dem Viskositätsmodifikator kann das Bindemittel fakultative Komponenten enthalten. Die Gesamtheit der fakultativen Komponenten im Bindemittel beträgt vorzugsweise weniger als 39,9 Gew.-%, bezogen auf die Gesamtheit des Bindemittels, insbesondere bevorzugt weniger als 20 Gew.-% bezogen auf die Gesamtheit des Bindemittels, und besonders bevorzugt weniger als 15 Gew.-%, oder sogar weniger als 10 Gew.-% bezogen auf die Gesamtheit des Bindemittels. Die fakultativen Komponenten müssen im Bindemittel gelöst vorliegen. Die Anteile addieren sich jeweils zu 100 Gew.-%.

Das Bindemittel wird mittels einer Druckvorrichtung selektiv auf der ausgebreiteten dünnen Schicht umfassend zumindest den Baugrundstoff und z.B. ggf. Bau- und Formgrundstoffadditiv(e) oder ggf. den Härter, aufgetragen.

Bindemittel ist der Furfurylalkohol mit darin gelöstem Viskositätsmodifikator, etwaig neben darin gelösten fakultativen Komponenten. Der Härter ist nicht Teil des Bindemittels. Das Bindemittel-System umfasst neben dem Bindemittel weiterhin zumindest den Härter. Das Bindemittel wird als in sich einheitliches Druckfluid mittels der Düsen des Druckkopfes gedruckt.

Des Weiteren betrifft die Erfindung einen Baukörper, insbesondere einen Formkörper, herstellbar nach dem erfindungsgemäßen Verfahren. Der Baukörper kann in zahlreichen Anwendungen Einsatz finden und ist in seinem Anwendungszweck nicht weiter eingeschränkt.

Des Weiteren betrifft die Erfindung einen Formkörper, herstellbar nach dem erfindungsgemäßen Verfahren. Der Formkörper wird für den Metallguss, insbesondere den Eisen-, Stahl-, Kupfer- oder Aluminium-Guss, verwendet bzw. ist hierfür vorgesehen.

Wird die Baustoffmischung zur Herstellung von Formkörpern eingesetzt, kann diese auch als Formstoffmischung und der Baugrundstoff analog als Formstoffgrundstoff bezeichnet werden.

Es wurde beobachtet, dass der Viskositätsmodifikator eine Reduktion der Festigkeiten von mittels Handformen hergestellten Formkörpern im NoBake Prozess (nachfolgend kurz Standard NoBake Prozess) hervorruft, verglichen mit Bindemitteln, die genauso aufgebaut waren, wo aber der Viskositätsmodifikator fehlte.

Überraschend wurde als Gegenstand der vorliegenden Erfindung gefunden, dass das erfindungsgemäße Bindemittel gegenüber gleichen Bindemitteln, die genauso aufgebaut waren, abgesehen von dem Viskositätsmodifikator, im 3D-Prozess aber zu deutlich höheren Festigkeiten führt.

Darüber hinaus erweist sich das erfindungsgemäße Bindemittel (enthaltend den Viskositätsmodifikator) als sehr lagerstabil, hat eine gute Verträglichkeit und zeigt - gegenüber gleichen Bindemitteln, die genauso aufgebaut sind, abgesehen von dem Viskositätsmodifikator, eine gute Druckstabilität.

Weiterhin beansprucht ist ein Kit umfassend das Bindemittel und getrennt hiervon den Härter umfassend eine Säure.

### Detaillierte Beschreibung der Erfindung

Im Folgenden werden die Komponenten des Verfahrens näher beschrieben:

### Baugrundstoff

Der Baugrundstoff ist ein anorganisches Material, das in partikulärer Form vorliegt. Der Baugrundstoff ist nicht besonders beschränkt. Der Baugrundstoff ist nach einer anderen Ausführungsform ein Siliziumcarbid oder ggfs. ein anderes versinterbares Material. Hier wird ein Baukörper hergestellt der später gesintert wird.

Der Baugrundstoff ist nach einer anderen bevorzugten Ausführungsform ein feuerfester Formgrundstoff (insbesondere, wenn zur Herstellung einer Formstoffmischung eingesetzt).

Der feuerfeste Formgrundstoff ist nicht besonders beschränkt. Als feuerfeste Formgrundstoffe / Baugrundstoffe sind alle partikulären Feststoffe einsetzbar. Der feuerfeste Formgrundstoff weist bevorzugt einen rieselfähigen Zustand auf. Als feuerfester Formgrundstoff können für die Herstellung von Formkörpern übliche und bekannte Materialien in reiner Form sowie Mischungen daraus verwendet werden. Geeignet sind beispielsweise Quarzsand, Zirkonsand oder Chromerzsand, Olivin, Vermiculit, Bauxit, Schamotte sowie künstlich hergestellte bzw. aus synthetischen Materialien erhältliche feuerfeste Formgrundstoffe wie Glasperlen, Glasgranulat, Aluminiumsilikatmikrohohlkugeln, und deren Mischungen. Aus Kostengründen ist insbesondere Quarzsand bevorzugt. Daher besteht der feuerfeste Formgrundstoff vorzugsweise zu mehr als 90 Gew.-% aus Quarzsand.

Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs mindestens etwa 600°C, bevorzugt mindestens etwa 900°C, besonders bevorzugt mindestens etwa 1200°C, und insbesondere bevorzugt mindestens etwa 1500°C.

Der mittlere Partikeldurchmesser des feuerfesten Formgrundstoffs beträgt in der Regel von etwa 30 µm bis etwa 500 µm, bevorzugt von etwa 40 µm bis etwa 400 µm, und besonders bevorzugt von etwa 50 µm bis etwa 250 µm. Die Partikelgröße lässt sich z.B. durch Siebung nach DIN ISO 3310 bestimmen.

Der Anteil des Baugrundstoffs oder feuerfesten Formgrundstoffs in der Baustoffmischung ist nicht besonders beschränkt. Der Baugrundstoff oder feuerfeste Formgrundstoff macht bevorzugt mindestens etwa 80 Gew.-%, insbesondere mindestens etwa 90 Gew.-%, besonders bevorzugt mindestens etwa 93 Gew.-% der Baustoffmischung bzw. Formstoffmischung aus.

### Bau- und Formgrundstoffadditive

Die Baustoffmischung kann weitere Feststoffe neben dem Baugrundstoff / dem feuerfesten Formgrundstoff enthalten. Diese werden im Rahmen der Erfindung als Bau- oder Formgrundstoffadditiv(e) bezeichnet. Sie sind in der Regel partikuläre Feststoffe. Der mittlere Partikeldurchmesser der Bau- und Formgrundstoffadditive beträgt in der Regel von etwa 30 µm bis etwa 500 µm, bevorzugt von etwa 40 µm bis etwa 400 µm, und besonders bevorzugt von etwa 50 µm bis etwa 250 µm. Die Partikelgröße lässt sich z.B. durch Siebung nach DIN ISO 3310 bestimmen.

Der Baugrundstoff oder feuerfeste Formgrundstoff, Härter und Bindermittel und die optionalen Bau- oder Formgrundstoffadditive (falls vorhanden) werden als Baustoffmischung bezeichnet. Beispiele für Bau- oder Formgrundstoffadditive sind organische oder mineralische Additive, wie Eisenoxide, Silikate, Aluminate, Holzmehle oder Stärken sowie Mischungen daraus. Diese können zur Vermeidung von Gussfehlern dem feuerfesten Formgrundstoff zugemischt werden.

Die Menge der Bau- oder Formgrundstoffadditive ist nicht besonders beschränkt und beträgt üblicherweise höchstens etwa 10 Gew.-%, bevorzugt höchstens etwa 7 Gew.-%, und besonders bevorzugt höchstens etwa 1 Gew.-% bezogen auf die Bau- oder Formgrundstoffmischung.

In einer bevorzugten Ausführungsform wird amorphes SiO₂ als Bau- oder Formgrundstoffadditiv eingesetzt.

Die Bau- und Formgrundstoffadditive werden verteilt in die dünne Schicht eingebracht. Es erfolgt kein selektiver Auftrag der Bau- oder Formgrundstoffadditive.

### Härter

Der Härter ist oder enthält eine Säure. Im Härter für die Aushärtung des Bindemittels werden übliche Säuren für die Gießereiformenherstellung oder Mischungen daraus mit einem pKₛ-Wert bei 25°C von kleiner 4, vorzugsweise mit einem pKₛ-Wert kleiner oder gleich 3,9, bevorzugt mit einem pKₛ-Wert kleiner 3 und besonders bevorzugt mit einem pKₛ- Wert kleiner 1,5 (jeweils bei 25°C) verwendet, wie beispielsweise organische Säuren wie para-Toluolsulfonsäure, Xylolsulfonsäure, Benzolsulfonsäure, Methansulfonsäure oder Milchsäure sowie anorganische Säuren wie Schwefelsäure oder Phosphorsäure oder Mischungen aus diversen organischen und anorganischen Säuren. Der Härter kann weiterhin Wasser enthalten. Besonders bevorzugt sind als Härter wässrige para-Toluolsulfonsäure, Schwefelsäure und/oder Milchsäure sowie Mischungen daraus.

Die Menge des Härters, einschließlich einer etwaigen wässrigen Verdünnung, in der Baustoffmischung / Formstoffmischung beträgt insbesondere 0,05 Gew.-% bis 3 Gew.-%, bevorzugt 0,1 Gew.-% bis 2,5 Gew.-%, und besonders bevorzugt 0,1 Gew.-% bis 2 Gew.-%, bezogen jeweils auf die Bau- oder Formstoffmischung.

Weiterhin kann der Härter Additive insbesondere zur Optimierung der sandtechnischen Eigenschaften aufweisen. Dazu gehören beispielsweise Härtungsmoderatoren wie Glykole, besonders Ethylenglykol oder Alkohole wie Ethanol, die in Mengen von 0 Gew.-% bis 15 Gew.-%, bevorzugt von 0 Gew.-% bis 10 Gew.-%, und insbesondere von 0 Gew.-% bis 7 Gew.-%, bezogen auf den Härter, eingesetzt werden.

Die Härter können auch in einem zusätzlichen Verfahrensschritt selektiv auf die dünne Schicht der Baustoffmischung aufgebracht werden. Der selektive Auftrag des Härters kann über zusätzlich integrierte Auftragsmechanismen, beispielsweise einen Inkjet-Druckkopf oder eine Sprühvorrichtung, erfolgen.

In einer bevorzugten Ausführungsform wird der Härter vor dem Ausbreiten der dünnen Schicht der Baustoffmischung zugesetzt / zugemischt und nicht selektiv aufgetragen.

### Bindemittel

Das Bindemittel enthält Furfurylalkohol. Der Anteil an Furfurylalkohol an der Gesamtheit des Bindemittels beträgt mehr als 60 Gew.-%, bevorzugt mehr als 75 Gew.-%, besonders bevorzugt mehr als 80 Gew.-%, und ganz besonders bevorzugt größer gleich 88 Gew.-% oder mehr als 90 Gew.-%. Nach einer Ausgestaltung werden abgesehen von dem Novolak keine weiteren Harze im Bindemittel eingesetzt.

Das Bindemittel weist eine Viskosität von 5 bis 40 mPas auf, bevorzugt von 6 bis 30 mPas, besonders bevorzugt von 7 bis 20 mPas, und ganz besonders bevorzugt von 8 bis 13 mPas auf, jeweils bei 25 °C. Die Messung der Viskosität erfolgt auf einem Brookfield-Rotationsviskosimeter mit der Messgeometrie Spindel 18 bei einer Viskosität bis 16 mPas und einer Geschwindigkeit von 200 U/min und bei einer Viskosität von unter 16 mPas mit der Messgeometrie Spindel UL-Adapter mit einer Geschwindigkeit von 50 U/min. Wenn nicht anders angegeben ist die Viskosität vorliegend jeweils bei 25 °C bestimmt worden.

Das Bindemittel weist vorzugsweise eine Oberflächenspannung von 15 bis 65 mN/m, bevorzugt von 20 bis 50 mN/m, besonders bevorzugt von 25 bis 45 mN/m, und ganz besonders bevorzugt von 30 bis 40 mN/m auf. Die Messung der Oberflächenspannung erfolgt nach der Ringmethode nach DeNoüy (bei 25 °C).

Das Bindemittel weist vorzugsweise eine Dichte von 1,0 bis 1,5 g/cm³, besonders bevorzugt von 1,05 bis 1,4 g/cm³, besonders bevorzugt von 1,05 bis 1,2 g/cm³, und ganz besonders bevorzugt von 1,1 bis 1,2 g/cm³ auf. Die Messung der Dichte erfolgt über die Biegeschwinger-Methode bei 20°C.

Das Bindemittel weist vorzugsweise einen pH-Wert von 3 bis 9, bevorzugt einen pH-Wert von 4 bis 8, besonders bevorzugt einen pH-Wert von 5 bis 7,5, und ganz besonders einen pH-Wert von 6 bis 7,5 auf.

Die Menge des Bindemittels beträgt vorzugsweise von 0,1 Gew.-% bis 10

Gew.-%, bevorzugt von 0,5 Gew.-% bis 7,5 Gew.-%, und besonders von 0,8 Gew.-% bis 4 Gew.-%, bezogen jeweils auf die Bau- oder Formstoffmischung.

### Viskositätsmodifikator

Das Bindemittel enthält einen Novolak zur Einstellung der Viskosität. Novolake sind lagerstabile methylenverbrückte Phenolharze mit einem Aldehyd zu Phenole-Verhältnis bzw. Formaldehyd zu Phenole-Verhältnis von kleiner als 1 zu 1, die durch Polykondensation der Edukte in Gegenwart katalytischer Mengen einer Säure oder eines Metallsalzes hergestellt werden. Bevorzugt wird eine saure Kondensation durchgeführt, d.h. es wird bevorzugt eine Säure eingesetzt.

Im Allgemeinen beträgt das Aldehyd zu Phenole-Verhältnis bei Novolaken von 0,3:1 bis kleiner 1:1 bevorzugt 0,4 bis 0,9:1 und besonders bevorzugt 0,6:1 bis 0,9:1.

Geeignet als Monomer zur Herstellung der Novolake sind Phenole, wie Phenol und/oder substituierte Phenole. Beispiele sind neben Phenol, Kresole oder Nonylphenol, 1,2-Dihydroxybenzol (Brenzcatechin), 1,3-Dihydroxybenzol (Resorcin) oder 1,4-Dihydroxybenzol (Hydrochinon) und/oder substituierte Phenole, wie Cashewnussschalenöl, d.h. eine Mischung aus Cardanol und Cardol, Bisphenol A, Bisphenol F, Bisphenol S oder Mischungen daraus. Besonders bevorzugt ist Phenol, z.B. bezogen auf molare Menge der in den Novolake eingebauten Phenole, z.B. größer 90 mol% Phenol oder sogar größer 95 mol% Phenol.

Als Aldehyde sind geeignet zum Beispiel Formaldehyd z.B. in Form wässriger Lösungen oder als Polymer in Form von Paraformaldehyd, Butyraldehyd, Glyocal und deren Mischungen. Besonders bevorzugt ist Formaldehyd oder Mischungen enthaltend überwiegend (bezogen auf molare Menge der Aldehyde, z.B. größer 90 mol% Formaldehyd oder sogar größer 95 mol% Formaldehyd.

Zur Herstellung der Novolake werden als Katalysatoren Säuren-wie z.B. Salzsäure, Schwefelsäure, Phosphorsäure, Sulfonsäuren, Oxalsäure oder Salicylsäure oder Anhydride wie zum Beispiel Maleinsäureanhydrid verwendet. Bevorzugt wird Oxalsäure verwendet. Eine weitere Möglichkeit besteht durch die Zugabe eines Metallsalzes, z.B. auf Basis von Zn(II)-, Mg(II) oder Cu(II)-Salze in katalytischen Mengen, z.B. als Acetat.

Typisch für Novolake ist folgende Struktureinheit aufweisend Methylenbrücken, wobei die überwiegende ortho-ortho Verknüpfung nur eine der Möglichkeiten der Verknüpfung ist, wenn auch eine bevorzugte. Einige, bevorzugt aber wenige der Phenol-Gruppen (z.B. weniger als 10 mol%) können auch substituiert sein oder weitere Hydroxygruppen aufweisen.

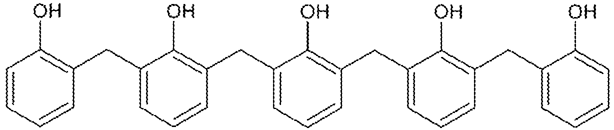

Die eingesetzten Novolake können im Grunde jegliche Form aufweisen wie beispielsweise Pulver, Flocken oder Pastillen. Bevorzugt werden sie (bei 25°C) in Pulverform eingesetzt und dann im Bindemittel bzw. Furfurylalkohol gelöst.

Der freie Phenolgehalt der eingesetzten Novolake beträgt insbesondere kleiner 5,0 Gew.-%, weiter bevorzugt kleiner 1,0 Gew.-%, noch weiter bevorzugt kleiner 0,5 Gew.-% und ganz besonders bevorzugt kleiner 0,2 Gew.-%. Die Messung des freien Phenolgehalts erfolgt via Gaschromatographie (GC) nach DIN 16916-02-L2 / DIN EN ISO 8974.

Die Menge des Viskositätsmodifikators beträgt 0,1 Gew.-% bis 12,0 Gew.-%, bevorzugt 2,0 Gew.-% bis 9,0 Gew.-%, und ganz besonders bevorzugt 3,0 Gew.-% bis 8,0 Gew.-%, bezogen auf die Gesamtheit des Bindemittels.

Das Zahlenmittel der Molmasse des Viskositätsmodifikators beträgt insbesondere mehr als 300 g/mol, bevorzugt mehr als 500 g/mol, und besonders bevorzugt mehr als 600 g/mol. Das Massemittel des Viskositätsmodifikators beträgt insbesondere mehr als 500 g/mol, bevorzugt mehr als 1500 g/mol, besonders bevorzugt mehr als 2500 g/mol und ganz besonders bevorzugt mehr als 3500 g/mol. Die Molmasse (Zahlenmittel) des Viskositätsmodifikators beträgt vorzugsweise weniger als 50000 g/mol, vorzugsweise weniger als 25000 g/mol. Die Messung des Molekulargewichtes erfolgt via Gelpermeationschromatographie (GPC) in THF nach DIN 55672-1.

Die eingesetzten Novolake können Hexamethylentetramin enthalten. Besonders bevorzugt wird der Novolak in Abwesenheit von Hexamethylentetramin eingesetzt, d.h. das Hexamethylentetramin ist weder dem Baugrundstoff beigemischt noch dem Bindemittel.

Die Herstellung von Novolaken ist dem Fachmann seit langer Zeit bekannt und wird beispielsweise von L. Pilato in seinem Buch "Phenolic Resins: A century of Progress", erschienen 2010 im Springer Verlag in Kapitel 4 und 7, insbesondere 4.3.1 bis 4.3.4, ausführlich beschrieben.

### Fakultative Komponenten des Bindemittels

Das Bindemittel kann weitere fakultative Komponenten wie weitere Harze (unterschiedlich von Novolak), Wasser, Glykol, Alkohol, Phenol-Verbindungen, Lösungsmittel, Silane, Plastifizierer, Härtungsmoderatoren, Oberflächenmodifizierer oder oberflächenaktive Substanzen enthalten.

Das Bindemittel kann weiterhin Phenol, Phenol-Verbindungen, Harze, Wasser, Glykole, Alkohole, Lösungsmittel und/oder Silane enthalten, insbesondere einzeln und/oder in der Summe von 0,01 bis 15 Gew.-%, bevorzugt 2 bis weniger als 12 Gew.-%, und besonders bevorzugt 5 bis weniger als 10 Gew.-%, bezogen auf das Bindemittel.

Gegebenenfalls können Phenol-Verbindungen im Bindemittel zur Steigerung der sandtechnischen Eigenschaften, beispielsweise der Festigkeit, enthalten sein. Die Phenol-Verbindungen sind Phenole und substituierte Phenole. Phenole sind durch einen oder mehrere aromatische Ringe und zumindest eine Hydroxy-Substitution an diesen gekennzeichnet. Beispiele sind, neben Phenol selbst, Phenole, wie z.B. Kresole oder Nonylphenol, 1,2-Dihydroxybenzol (Brenzcatechin) oder 1,3-Dihydroxybenzol (Resorcin), Beispiele für substituierte Phenole sind z.B. Cashewnussschalenöl, d.h. eine Mischung aus Cardanol und Cardol, 1,4-Dihydroxybenzol (Hydrochinon), Bisphenol A , Bisphenol S oder Bisphenol F oder Mischungen daraus. Besonders bevorzugt ist Resorcin als Phenol-Verbindung. Substituierte Phenole sind mit Kohlenwasserstoff-Gruppen substituierte und/oder über Kohlenwasserstoffe verbrückte Phenole. Phenole-Verbindungen als fakultative Komponente sind somit solche Verbindungen, die in die Gruppe der Phenole oder substituierten Phenole fallen. Ein Novolak oder ein anderes Polymer, das Phenol als Monomerbaustein enthält, ist/sind keine Phenol-Verbindung im Sinne der Erfindung.

Das Bindemittel enthält als fakultative Komponente vorzugsweise Silane aufweisend Silicium -O-(C1- bis C4- Alkyl) -Gruppen und ggfs. auch Silicium -(C1- bis C4- Alkyl) und/oder -(C1- bis C4- Alkylen)-Amino) -Gruppen. Ein bevorzugter Vertreter hiervon ist Aminopropyltriethoxysilan.

Das Bindemittel kann darüber hinaus fakultativ weitere Harze (unterschiedlich von Novolak) enthalten, die im Furfurylalkohol des Bindemittels gelöst werden. Sofern ein weiteres Harz dem Bindemittel zugegeben wird, umfasst dieses Harz bevorzugt ein Furanharz. Das Furanharz ist nicht besonders beschränkt und kann jedes auf dem Fachgebiet bekannte Furanharz sein.

Beispielsweise kann das Furanharz ein Polymer aus Furfurylalkohol und/oder Furan sein, aber auch ein Polymer welches zusätzlich - neben Furfurylalkohol und/oder Furan - Formaldehyd, Harnstoff und/oder Phenol als weiteres Monomer oder weitere Monomere enthält.

Der Anteil der fakultativen weiteren Harze, insbesondere der Furanharze, an der Gesamtheit des Bindemittels beträgt weniger als 15 Gew.-%, bevorzugt weniger als 12 Gew.-%, und besonders bevorzugt weniger als 10 Gew.-%, insbesondere größer 2 Gew.-%, und insbesondere größer 5 Gew.-%.

Der Anteil der fakultativen Komponenten an der Gesamtheit des Bindemittels beträgt weniger als 39,9 Gew.-%, oder bevorzugt weniger als 20 Gew.-%, oder weniger als 15 Gew.-%, und besonders bevorzugt weniger als 10 Gew.-%.

Werden keine Harze als fakultative Komponente eingesetzt beträgt der Anteil der als fakultative Komponente bevorzugt weniger als 20 Gew.-%, oder weniger als 15 Gew.-%, und besonders bevorzugt weniger als 10 Gew.-%.

### Verfahren

Sobald die Festigkeiten es gestatten, kann die ungebundene Baustoffmischung (dort wo das Bindemittel nicht aufgetragen wurde oder, soweit auch der Härter selektiv aufgebracht wird, auch ohne den Härter) im Anschluss von dem Baukörper entfernt und der Baukörper der weiteren Behandlung, z.B. der Vorbereitung zum Metallguss, zugeführt werden. Das Entfernen der ungebundenen von der gebundenen Baustoffmischung gelingt beispielsweise durch einen Auslauf, sodass die ungebundene Baustoffmischung herausrieseln kann.

Die gebundene Baustoffmischung (Baukörper) kann beispielsweise mithilfe von Druckluft oder durch Pinseln von Resten der ungebundenen Baustoffmischung befreit werden.

Die ungebundene Baustoffmischung kann für einen neuen Druckvorgang wiederverwendet werden.

Das Bedrucken erfolgt z.B. mit einem eine Vielzahl von Düsen aufweisenden Druckkopf, wobei die Düsen vorzugsweise einzeln selektiv ansteuerbar sind. Nach einer weiteren Ausgestaltung wird der Druckkopf zumindest in einer Ebene von einem Computer gesteuert bewegt und die Düsen tragen das flüssige Bindemittel schichtweise auf. Der Druckkopf kann z.B. ein Drop-on-Demand Druckkopf mit Bubble-Jet oder vorzugsweise Piezo-Technik sein.

### Beispiele

Die Erfindung wird im Weiteren anhand von Versuchsbeispielen erläutert, ohne jedoch auf diese beschränkt zu sein.

Sofern keine anderen Angaben gegeben sind, beziehen sich alle Verhältnisse und Prozentangaben auf das Gewicht.

### Beispiel 1: Festigkeiten hergestellter Baukörper im Standard NoBake-Prozess

Um die Festigkeitsausbildung unterschiedlicher Bindemittel zu vergleichen, wurde Quarzsand H32 der Firma Quarzwerke-Gruppe Haltern in einen Flügelmischer der Firma Beba vorgelegt. Anschließend wurde zunächst 1,0 Gew.-% des Bindemittels bezogen auf den Sand und anschließend 0,4 Gew.-% eines Härters auf Sulfonsäure-Basis bezogen auf den Sand zugefügt und jeweils für 1 Minute intensiv mit dem Baugrundstoff vermischt (Formstoffmischung 1).

Als Vergleichs-Bindemittel 1 (V) wurde ein kommerzielles Produkt (größer 87 Gew.-% Furfurylalkohol und Bisphenol-A und kleiner 0.5 Gew.-% Silan) mit einer Viskosität von 9 mPas bei 25°C verwendet.

Das Bindemittel 2 (größer 87 Gew. % Furfurylalkohol), hergestellt unter Zugabe von 6,5 Gew. % eines Novolaks als Viskositätsmodifikators, wurde ebenfalls auf 9 mPas bei 25°C eingestellt. Beide Bindemittel enthalten den gleichen Typ und die gleiche Menge an Silan als fakultativer Komponente.

Der Novolak hatte ein zahlenmittleres Molekulargewicht von 697 g/mol. Das Molekulargewicht wurde mittels GPC-Chromatogramm ermittelt, erstellt auf einem Agilent Gerät der Serie 1100, ausgestattet mit einer SDV-Vorsäule von 8x50 mm, einer linearen SDV-Säule (5 µm, 1000Å) und einer linearen SDV-Säule (5 µm, 100Å). Die jeweilige Probe wurde mit einer Durchflussrate von 1 mL min⁻¹ in THF und Polystyrol 700000 als internem Standard bei 35 °C, kalibriert gegen Polystyrol-Standards, gemessen. Die Detektion erfolgte über das UV-Signal (271 nm). Alternativ kann auch eine Detektion über den Brechungsindex (RI) erfolgen. Eine Detektion über das UV-Signal (271 nm) ist bevorzugt. Die Auswertung der Chromatogramme erfolgte mit der Software WinGPC. SDV steht für Divinylbenzol vernetztes Polystyrol.

Folgende Proben wurden verwendet:
Bindemittel 1 (V): Furfurylalkohol plus Bisphenol-A und Silan (Viskosität: 9 mPas bei 25°C)
Bindemittel 2: Furfurylalkohol plus Novolak als Viskositätsmodifikator und Silan: 6,5% Novolak (Viskosität: 9 mPas bei 25°C)

Für die Festigkeitsprüfung wurden quaderförmige Prüfriegel mit den Abmessungen 171 mm x 22,36 mm x 22,36 mm hergestellt (Georg-Fischer-Riegel). Dazu wurde ein Teil der hergestellten Formstoffmischung in einen Formkasten mit 12 Gravuren in den oben genannten Dimensionen eingefüllt und durch Vibration für 30 Sekunden verdichtet. Nach 30 Minuten wurden die Prüfriegel aus den Gravuren des Formkastens entnommen.

Die Prüfung der Festigkeit erfolgte über die Bestimmung der 3-Punkt-Biegefestigkeit auf der Festigkeitsprüfmaschine Jung SJ1 der Firma Jung Instruments.

Die Biegefestigkeiten wurden nach folgenden Zeiten bestimmt:
- 1 Stunde nach dem Formen
- 2 Stunden nach dem Formen
- 4 Stunden nach dem Formen
- 24 Stunden nach dem Formen

Die erhaltenen Festigkeiten sind in Tabelle 1 zusammengefasst.

**Tabelle 1. Festigkeiten für unterschiedliche Bindemittel nach 1, 2, 4 und 24 Stunden (V: Vergleich).**

| | Biegefestigkeiten [N/cm²] | | | |
|---|---|---|---|---|
| Formstoffmischung enthaltend | 1 Std. | 2 Std. | 4 Std. | 24 Std. |
| Bindemittel 1(V) | 372 | 472 | 519 | 554 |
| Bindemittel 2 | 289 | 417 | 496 | 503 |

Beim Standard NoBake-Prozess wird durch die Zugabe von Novolak eine Verminderung der Festigkeit beobachtet.

### Bespiel 2: Festigkeiten hergestellter Baukörper im 3D Druck

Um die Festigkeitsausbildung unterschiedlicher Bindemittel in einem 3D-Druckprozess zu vergleichen, wurde zuerst eine Vorstufe aus Quarzsand GS 14 (mittlere Korngröße 0,14 mm, Produkt der Firma Strobel) vorgelegt und mit 0,20 Gew.-% eines Härters auf Sulfonsäure-Basis, bezogen auf den Sand, in einem Flügelmischer vermischt und so die Formstoffmischung 2 hergestellt. Der Härter war jeweils para-Toluolsulfonsäure 65 Gew.-% in Wasser.

Die Herstellung der Baukörper erfolgte auf einem kommerziellen Drucksystem (VX 200 der Firma Voxeljet AG mit Piezo-Inkjet-Druckkopf). Die Vorstufe der Baustoffmischung wurde in Schichten von 0,28 mm Stärke über ein vibrationsgestütztes Auftragsverfahren im Bauraum des Druckers ausgebreitet und über eine Metall-Klinge geglättet. In einem nächsten Schritt erfolgte dann der selektive Auftrag des Bindemittels entsprechend der vorliegenden CAD-Daten. Als Baukörper wurden Biegeriegel mit den Abmessungen 22,36 mm x 22,36 mm x 170,00 mm hergestellt. Die Binderzugabemenge wurde stets auf 1,85 Vol.-%, bezogen auf das Volumen der Baustoffmischung, eingestellt. Die Baukörper wurden nach 12 h auf Ihre Festigkeit und ihren Glühverlust bei 900 °C und 3 h Haltezeit hin untersucht.

Als Vergleichs-Bindemittel 1 (V) wurde ein Bindemittel (größer 87 Gew.-% Furfurylalkohol plus Bisphenol-A und und kleiner 0.5 Gew.-% Silan) mit einer Viskosität von 9 mPas bei 25°C verwendet.

Die Druckperformance ist von der Viskosität abhängig. Aus diesem Grund wurde das Bindemittel 2 (größer 87 Gew.-% Furfurylalkohol) durch die Zugabe von 6,5 Gew.-% eines Novolaks als Viskositätsmodifikators ebenfalls auf 9 mPas eingestellt. Beide Bindemittel enthalten den gleichen Typ und die gleiche Menge an Silan als fakultative Komponente.

Folgende Proben wurden hergestellt:
Bindemittel 1 (V): Furfurylalkohol plus Bisphenol-A und Silan (Viskosität: 9 mPas bei 25°C)
Bindemittel 2: Furfurylalkohol plus Novolak als Viskositätsmodifikator und Silan: 6,5% Novolak (Viskosität: 9 mPas bei 25°C)

Die Prüfung der Festigkeit erfolgte über die Bestimmung der 3-Punkt-Biegefestigkeit auf der Festigkeitsprüfmaschine Jung SJ1 der Firma Jung Instruments. Die erhaltenen Festigkeiten und Glühverluste sind in Tabelle 2 gelistet.

**Tabelle 2: Festigkeit und Glühverlust für unterschiedliche Bindemittel mit eingestellter Viskosität, sowie entsprechende Glühverluste bei 900 °C und 3 h Haltezeit (V: Vergleich)**

| Baustoffmischung mit | Festigkeit nach 12 h [N/cm²] | Glühverlust bei 900 °C und 3 h Haltezeit [%] |
|---|---|---|
| Bindemittel 1 (V) | 245 | 1,7 |
| Bindemittel 2 | 361 | 1,7 |

Die Glühverluste zeigten, dass beide Baukörper die gleiche Menge Bindemittel enthielten. Somit sind die untersuchten Baustoffmischungen miteinander vergleichbar.

Überraschenderweise zeigt sich, dass Bindemittel 2 im 3D-Druck im Vergleich zu Bindemittel 1 (V) eine deutlich höhere Festigkeit aufweist. Überraschend wurde gefunden, dass das erfindungsgemäße Bindemittel, gegenüber gleichen Bindemitteln, die genauso aufgebaut sind, abgesehen von dem Viskositätsmodifikator, zu deutlich höheren Festigkeiten im 3D-Prozess führt, was aus den Festigkeiten im Standard NoBake Prozess nicht herleitbar war (Vergleich Beispiel 1), weil dort die Zugabe von Novolak zum Bindemittel mit einem Festigkeitsverlust verbunden war.

## Patentansprüche

1. Verfahren zum schichtweisen Aufbau von Baukörpern aus einer Baustoffmischung umfassend zumindest einen Baugrundstoff, einen Härter und ein Bindemittel, umfassend zumindest die folgenden Schritte:
a) Bereitstellen zumindest eines Baugrundstoffs, eines Härters und eines Bindemittels;
b) Ausbreiten einer Schicht zumindest des Baugrundstoffs mit einer Schichtdicke von 0,05 mm bis 3 mm;
c) Bedrucken ausgewählter Bereiche der Schicht mit dem Bindemittel umfassend zumindest Furfurylalkohol und einen Viskositätsmodifikator; und
d) mehrfaches Wiederholen der Schritte b) und c);
wobei der Härter entweder im Baugrundstoff als Teil der Schicht ausgebreitet wird oder auf die Schicht aufgebracht wird oder beides;
wobei der Härter eine Säure ist oder enthält;
wobei der Viskositätsmodifikator ein im Bindemittel gelöster Novolak ist; und
das Bindemittel eine Viskosität von 5 bis 40 mPas bei 25 °C aufweist;
wobei das Bindemittel 0,1 bis 25 Gew.-% des Novolaks umfasst; und
wobei das Bindemittel zu mehr als 60 Gew.-% Furfurylalkohol umfasst.

2. Verfahren gemäß Anspruch 1, wobei das Bindemittel zu mehr als 75 Gew.-%, bevorzugt zu mehr als 80 Gew.-%, und besonders bevorzugt zu mehr als 90 Gew.-% Furfurylalkohol umfasst.

3. Verfahren nach zumindest einem der vorhergehenden Ansprüche, wobei das Bindemittel 0,1 bis 12 Gew.-%, vorzugsweise 2,0 bis 9,0 Gew.-%, und besonders bevorzugt 3,0 Gew.-% bis 8,0 Gew.-% des Novolaks umfasst.

4. Verfahren nach zumindest einem der vorhergehenden Ansprüche, wobei der Novolak in fester Form dem Furfurylalkohol bzw. dem Bindemittel zugegeben wird und dann im Bindemittel gelöst ist.

5. Verfahren nach zumindest einem der vorhergehenden Ansprüche, wobei das Zahlenmittel der Molmasse des Viskositätsmodifikators größer als 300 g/mol, bevorzugt größer als 500 g/mol, und besonders bevorzugt größer als 600 g/mol ist.

6. Verfahren nach zumindest einem der vorhergehenden Ansprüche, wobei der freie Phenolgehalt des Novolaks kleiner 5,0 Gew.-%, bevorzugt kleiner 1,0 Gew.-%, noch weiter bevorzugt kleiner 0,5 Gew.-% und ganz besonders bevorzugt kleiner 0,2 Gew.-% beträgt.

7. Verfahren nach zumindest einem der vorhergehenden Ansprüche, wobei das Bindemittel eine Viskosität von 6 bis 30 mPas, besonders bevorzugt von 7 bis 20 mPas, und ganz besonders bevorzugt von 8 bis 13 mPas, jeweils bei 25 °C, aufweist.

8. Verfahren nach zumindest einem der vorhergehenden Ansprüche, wobei zwischen 0,05 Gew.-% bis kleiner 3 Gew.-%, vorzugsweise zwischen 0,1 Gew.-% und 2,5 Gew.-%, und besonders bevorzugt zwischen 0,1 Gew.-% und 2 Gew.-% Härter, bezogen jeweils auf die Baustoffmischung, eingesetzt werden.

9. Verfahren nach zumindest einem der vorhergehenden Ansprüche, wobei der Härter weiterhin Glykole, insbesondere Ethylenglykol, und/oder Alkohole, insbesondere Ethanol, vorzugsweise in Mengen von größer 0 Gew.-% bis 15 Gew.-%, bezogen auf den Härter, enthält.

10. Verfahren nach zumindest einem der vorhergehenden Ansprüche, wobei das Bindemittel weiterhin Phenol, Phenol-Verbindungen, weitere Harze, Wasser, Glykole, Alkohole, Lösungsmittel und/oder Silane enthält, insbesondere in der Summe von 0,01 bis 15 Gew.-%, bevorzugt 2 bis weniger als 12 Gew.-%, und besonders bevorzugt 5 bis weniger als 10 Gew.-%, bezogen auf das Bindemittel.

11. Verfahren nach zumindest einem der vorhergehenden Ansprüche, wobei das Bindemittel weniger als 15 Gew.-%, bevorzugt weniger als 12 Gew.-%, und besonders bevorzugt weniger als 10 Gew.-% Furanharze enthält.

12. Verfahren nach zumindest einem der vorhergehenden Ansprüche, wobei die Baustoffmischung einen Baugrundstoff umfasst, vorzugsweise einen feuerfesten Formgrundstoff, und der feuerfeste Formgrundstoff vorzugsweise Quarzsand, Zirkonsand, Chromerzsand, Olivin, Vermiculit, Bauxit, Schamotte, Glasperlen, Glasgranulat, Aluminiumsilikatmikrohohlkugeln und deren Mischungen, umfasst.

13. Verfahren nach zumindest einem der vorhergehenden Ansprüche, wobei der Baugrundstoff mittlere Partikeldurchmesser von 30 µm bis 500 µm, bevorzugt von 40 µm bis etwa 400 µm, und besonders bevorzugt von 50 µm bis etwa 250 µm aufweist, bestimmt durch Siebung nach Norm DIN ISO 3310.

14. Verfahren nach zumindest einem der vorhergehenden Ansprüche, wobei größer 80 Gew.-%, vorzugsweise größer 90 Gew.-%, und besonders bevorzugt größer 93 Gew.-% der Baustoffmischung feuerfester Formgrundstoff sind.

15. Verfahren nach zumindest einem der vorhergehenden Ansprüche, wobei die Baustoffmischung weiterhin amorphes Siliziumdioxid umfasst, insbesondere 1 bis 10 Gew.-%.

16. Verfahren nach zumindest einem der vorhergehenden Ansprüche umfassend weiterhin die folgenden Schritte:
i) Härtung des Baukörpers nach Beendigung des schichtweisen Aufbaus, ggfs. in einem Ofen oder mittels Mikrowelle, zum Erhalt eines zumindest teilgehärteten Baukörpers, und nachfolgendes
ii) Entfernen der ungebundenen Baustoffmischung von dem zumindest teilgehärteten Baukörper.

17. Verfahren nach zumindest einem der vorhergehenden Ansprüche, wobei das Bedrucken mit einem eine Vielzahl von Düsen aufweisenden Druckkopf erfolgt, wobei die Düsen vorzugsweise einzeln selektiv ansteuerbar sind, wobei der Druckkopf insbesondere ein Drop-on-Demand Druckkopf mit Bubble-Jet oder Piezo-Technik ist.

18. Verfahren nach Anspruch 17, wobei der Druckkopf zumindest in einer Ebene von einem Computer gesteuert bewegbar ist und die Düsen zumindest das Bindemittel schichtweise auftragen.

19. Verfahren nach zumindest einem der vorhergehenden Ansprüche, wobei die Baustoffmischung als Baugrundstoff Siliziumcarbid oder ein anderes versinterbares Material umfasst und der Baukörper gesintert wird.

20. Form oder Kern herstellbar nach dem Verfahren nach zumindest einem der Ansprüche 1 bis 18 für den Metallguss, insbesondere den Eisen-, Stahl-, Kupfer- oder Aluminium-Guss.

21. Bindemittel mit einer Viskosität von 5 bis 40 mPas bei 25 °C umfassend mehr als 60 Gew.-% Furfurylalkohol und 0,1 Gew.-% bis 12,0 Gew.-% zumindest eines Novolaks.

22. Bindemittel nach Anspruch 21, wobei das Bindemittel weniger als 15 Gew.-%, bevorzugt weniger als 12 Gew.-%, und besonders bevorzugt weniger als 10 Gew.-% Furanharze enthält.

23. Bindemittel nach Anspruch 21 oder 22 weiter **gekennzeichnet durch** eines oder mehrere der Merkmale der Ansprüche 2 bis 7 und 10.

24. Kit umfassend das Bindemittel nach zumindest einem der Ansprüche 21 bis 23 und, getrennt hiervon, einen Härter umfassend eine Säure, wobei der Härter vorzugsweise weiterhin Glykole gemäß Anspruch 9 enthält.

## Claims

1. Process for the layer-by-layer production of building structures from a building material mixture comprising at least a building base material, a hardener and a binder, comprising at least the following steps:
a) providing at least a building base material, a hardener and a binder;
b) spreading a layer of at least the building base material with a layer thickness of 0.05 mm to 3 mm;
c) printing selected areas of the layer with the binder comprising at least furfuryl alcohol and a viscosity modifier; and
d) repeating steps b) and c) several times;
wherein the hardener is either spread as part of the layer in the building base material or is applied to the layer, or both;
wherein the hardener is or contains an acid;
wherein the viscosity modifier is a novolak dissolved in the binder; and
the binder has a viscosity of 5 to 40 mPas at 25 °C;
wherein the binder comprises from 0.1 to 25 wt.% by weight of the novolak; and
wherein the binder comprises more than 60 wt.% by weight furfuryl alcohol.

2. Process according to claim 1, wherein the binder comprises more than 75 wt.%, preferably more than 80 wt.%, and particularly preferably more than 90 wt.% of furfuryl alcohol.

3. Process according to at least one of the preceding claims, wherein the binder comprises 0.1 to 12 wt.%, preferably 2.0 to 9.0 wt.%, and more preferably 3.0 wt.% to 8.0 wt.% of the novolak.

4. Process according to at least one of the preceding claims, wherein the novolak is added in solid form to the furfuryl alcohol or the binder and is then dissolved in the binder.

5. Process according to at least one of the preceding claims, wherein the number average molecular weight of the viscosity modifier is greater than 300 g/mol, preferably greater than 500 g/mol, and particularly preferably greater than 600 g/mol.

6. Process according to at least one of the preceding claims, wherein the free phenol content of the novolak is less than 5.0 wt.%, preferably less than 1.0 wt.%, still more preferably less than 0.5 wt.% and very particularly preferably less than 0.2 wt.%.

7. Process according to at least one of the preceding claims, wherein the binder has a viscosity of from 6 to 30 mPas, particularly preferably from 7 to 20 mPas, and very particularly preferably from 8 to 13 mPas, in each case at 25 °C.

8. Process according to at least one of the preceding claims, wherein between 0.05 wt.% and less than 3 wt.%, preferably between 0.1 wt.% and 2.5 wt.%, and particularly preferably between 0.1 wt.% and 2 wt.% of hardener, based in each case on the building material mixture, are used.

9. Process according to at least one of the preceding claims, wherein the hardener further comprises glycols, in particular ethylene glycol, and/or alcohols, in particular ethanol, preferably in amounts of greater than 0 wt.% to 15 wt.%, based on the hardener.

10. Process according to at least one of the preceding claims, wherein the binder further comprises phenol, phenol compounds, further resins, water, glycols, alcohols, solvents and/or silanes, in particular in the sum of from 0.01 to 15 wt.%, preferably from 2 to less than 12 wt.%, and particularly preferably from 5 to less than 10 wt.%, based on the binder.

11. Process according to at least one of the preceding claims, wherein the binder comprises less than 15 wt.%, preferably less than 12 wt.%, and particularly preferably less than 10 wt.% of furan resins.

12. Process according to at least one of the preceding claims, wherein the building material mixture comprises a building base material, preferably a refractory molding base material, and the refractory molding base material preferably comprises quartz sand, zircon sand, chrome ore sand, olivine, vermiculite, bauxite, chamotte, glass beads, glass granulate, aluminum silicate micro hollow spheres and mixtures thereof.

13. Process according to at least one of the preceding claims, wherein the building base material has average particle diameters of from 30 µm to 500 µm, preferably from 40 µm to about 400 µm, and particularly preferably from 50 µm to about 250 µm, determined by sieving according to standard DIN ISO 3310.

14. Process according to at least one of the preceding claims, wherein greater than 80 wt.%, preferably greater than 90 wt.%, and particularly preferably greater than 93 wt.% of the building material mixture is refractory molding base material.

15. Process according to at least one of the preceding claims, wherein the building material mixture further comprises amorphous silicon dioxide, in particular 1 to 10 wt.%.

16. Process according to at least one of the preceding claims, further comprising the following steps:
i) hardening of the building structure after completion of the layer-by-layer construction, optionally in an oven or by means of a microwave, to obtain an at least partially hardened building structure, and subsequent
ii) removal of the unbound building material mixture from the at least partially hardened building structure.

17. Process according to at least one of the preceding claims, wherein the printing is carried out with a print head having a plurality of nozzles, wherein the nozzles are preferably individually selectively controllable, wherein the print head is in particular a drop-on-demand print head with bubble jet or piezo technology.

18. Process according to claim 17, wherein the print head is movable at least in one plane under the control of a computer and the nozzles apply at least the binder layer-by-layer.

19. Process according to at least one of the preceding claims, wherein the building material mixture comprises silicon carbide or another sinterable material as building base material and the building structure is sintered.

20. Mold or core producible by the method according to at least one of claims 1 to 18 for metal casting, in particular iron, steel, copper or aluminum casting.

21. Binder having a viscosity of from 5 to 40 mPas at 25 °C comprising more than 60 wt.% of furfuryl alcohol and from 0.1 wt.% to 12.0 wt.% of at least one novolak.

22. Binder according to claim 21, wherein the binder contains less than 15 wt.%, preferably less than 12 wt.%, and particularly preferably less than 10 wt.% of furan resins.

23. Binder according to claim 21 or 22 further **characterized by** one or more of the features of claims 2 to 7 and 10.

24. Kit comprising the binder according to at least one of claims 21 to 23 and, separately therefrom, a hardener comprising an acid, wherein the hardener preferably further comprises glycols according to claim 9.

## Revendications

1. - Procédé pour la construction par couches de corps de construction à partir d'un mélange de matières de construction comprenant au moins une matière de base de construction, un durcisseur et un liant, comportant au moins les étapes suivantes :
a) fourniture d'au moins une matière de base de construction, d'un durcisseur et d'un liant ;
b) étalement d'une couche au moins de la matière de base de construction avec une épaisseur de couche de 0,05 mm à 3 mm ;
c) impression de zones sélectionnées de la couche avec le liant comportant au moins de l'alcool furfurylique et un modificateur de viscosité ; et
d) répétition multiple des étapes b) et c) ;
le durcisseur soit étant étalé dans la matière de base de construction en tant que partie de la couche, soit étant appliqué sur la couche, ou les deux ;
le durcisseur étant ou contenant un acide ;
le modificateur de viscosité étant une novolaque dissoute dans le liant ; et
le liant présentant une viscosité de 5 à 40 mPa.s à 25 °C ;
le liant comportant 0,1 à 25 % en poids de la novolaque ; et
le liant comportant plus de 60 % en poids d'alcool furfurylique.

2. - Procédé selon la revendication 1, dans lequel le liant comporte plus de 75 % en poids, de préférence plus de 80 % en poids, et de façon particulièrement préférée plus de 90 % en poids d'alcool furfurylique.

3. - Procédé selon au moins l'une des revendications précédentes, dans lequel le liant comporte 0,1 à 12 % en poids, de préférence 2,0 à 9,0 % en poids, et, de façon particulièrement préférée, 3,0 % en poids à 8,0 % en poids de la novolaque.

4. - Procédé selon au moins l'une des revendications précédentes, dans lequel la novolaque est ajoutée sous forme solide à l'alcool furfurylique ou au liant, puis est dissoute dans le liant.

5. - Procédé selon au moins l'une des revendications précédentes, dans lequel la masse moléculaire moyenne en nombre du modificateur de viscosité est supérieure à 300 g/mol, de préférence supérieure à 500 g/mol et, de façon particulièrement préférée, supérieure à 600 g/mol.

6. - Procédé selon au moins l'une des revendications précédentes, dans lequel la teneur en phénol libre de la novolaque est inférieure à 5,0 % en poids, de préférence inférieure à 1,0 % en poids, de façon encore plus préférée inférieure à 0,5 % en poids et, de façon tout particulièrement préférée, inférieure à 0,2 % en poids.

7. - Procédé selon au moins l'une des revendications précédentes, dans lequel le liant présente une viscosité de 6 à 30 mPa.s, de façon particulièrement préférée de 7 à 20 mPa.s, et, de façon tout particulièrement préférée, 8 à 13 mPa.s, dans chaque cas à 25°C.

8. - Procédé selon au moins l'une des revendications précédentes, dans lequel on utilise entre 0,05 % en poids et moins de 3 % en poids, de préférence entre 0,1 % en poids et 2,5 % en poids, et, de façon particulièrement préférée, entre 0,1 % en poids et 2 % en poids de durcisseur, par rapport à chaque fois au mélange de matières de construction.

9. - Procédé selon au moins l'une des revendications précédentes, dans lequel le durcisseur contient en outre des glycols, en particulier de l'éthylène glycol, et/ou des alcools, en particulier de l'éthanol, de préférence dans des quantités de plus de 0 % en poids à 15 % en poids, par rapport au durcisseur.

10. - Procédé selon au moins l'une des revendications précédentes, dans lequel le liant contient en outre du phénol, des composés phénoliques, d'autres résines, de l'eau, des glycols, des alcools, des solvants et/ou des silanes, en particulier pour un total de 0,01 à 15 % en poids, de préférence de 2 à moins de 12 % en poids, et, de façon particulièrement préférée, de 5 à moins de 10 % en poids, par rapport au liant.

11. - Procédé selon au moins l'une des revendications précédentes, dans lequel le liant contient moins de 15 % en poids, de préférence moins de 12 % en poids, et, de façon particulièrement préférée, moins de 10 % en poids de résines furaniques.

12. - Procédé selon au moins l'une des revendications précédentes, dans lequel le mélange de matières de construction comprend une matière de base de construction, de préférence une matière de base de moule réfractaire, et la matière de base de moule réfractaire comporte, de préférence, du sable de quartz, du sable de zircon, du sable de minerai de chrome, de l'olivine, de la vermiculite, de la bauxite, de la chamotte, des perles de verre, des granulés de verre, des microbilles creuses de silicate d'aluminium et leurs mélanges.

13. - Procédé selon au moins l'une des revendications précédentes, dans lequel la matière de base de construction présente un diamètre moyen de particule de 30 µm à 500 µm, de préférence de 40 µm à environ 400 µm, et, de façon particulièrement préférée, de 50 µm à environ 250 µm, déterminé par tamisage selon la norme DIN ISO 3310.

14. - Procédé selon au moins l'une des revendications précédentes, dans lequel plus de 80 % en poids, de préférence plus de 90 % en poids, et, de façon particulièrement préférée, plus de 93 % en poids du mélange de matières de construction sont constitués d'une matière de base de moule réfractaire.

15. - Procédé selon au moins l'une des revendications précédentes, dans lequel le mélange de matières de construction comporte en outre du dioxyde de silicium amorphe, en particulier 1 à 10 % en poids.

16. - Procédé selon au moins l'une des revendications précédentes, comportant en outre les étapes suivantes :
i) durcissement du corps de construction après achèvement de la construction par couches, le cas échéant dans un four ou au moyen d'un micro-ondes, pour obtenir un corps de construction au moins partiellement durci, puis
ii) élimination du mélange de matières de construction non lié à partir du corps de construction au moins partiellement durci.

17. - Procédé selon au moins l'une des revendications précédentes, dans lequel l'impression est réalisée à l'aide d'une tête d'impression présentant une pluralité de buses, les buses étant, de préférence, aptes à être commandées individuellement de manière sélective, la tête d'impression étant, en particulier, une tête d'impression à éjection de gouttes sur demande utilisant la technologie à jet d'encre ou piézo-électrique.

18. - Procédé selon la revendication 17, dans lequel la tête d'impression est déplaçable au moins dans un plan sous la commande d'un ordinateur et les buses appliquent au moins le liant par couches.

19. - Procédé selon au moins l'une des revendications précédentes, dans lequel le mélange de matières de construction comporte, comme matière de base de construction, du carbure de silicium ou un autre matériau frittable, et le corps de construction est fritté.

20. - Moule ou noyau apte à être fabriqué par le procédé selon au moins l'une des revendications 1 à 18 pour la coulée de métaux, en particulier la coulée de fer, d'acier, de cuivre ou d'aluminium.

21. - Liant ayant une viscosité de 5 à 40 mPa.s à 25°C, comportant plus de 60 % en poids d'alcool furfurylique et 0,1 % en poids à 12,0 % en poids d'au moins une novolaque.

22. - Liant selon la revendication 21, dans lequel le liant contient moins de 15 % en poids, de préférence moins de 12 % en poids, et, de façon particulièrement préférée, moins de 10 % en poids de résines furaniques.

23. - Liant selon la revendication 21 ou 22, **caractérisé en outre par** une ou plusieurs des caractéristiques des revendications 2 à 7 et 10.

24. - Kit comportant le liant selon au moins l'une des revendications 21 à 23 et, séparément de celui-ci, un durcisseur comportant un acide, le durcisseur contenant de préférence en outre des glycols selon la revendication 9.
